# DEMANDE DE BREVET EUROPEEN

(11) **EP 0 736 868 A1**
(43) Date de publication de la demande: **09.10.1996**
(21) Numéro de dépôt: 96870031.0
(22) Date de dépôt: 13.03.1996
(51) Int. Cl.: G11B 15/44, G11B 15/675, G11B 15/67

(54) **Dispositif de détection de cassettes**

(30) Priorité: 05.04.1995 BE 9500314
(71) Demandeur: STAAR SOCIETE ANONYME, B-1200 Bruxelles (BE)
(72) Inventeur: D'Alayer de Costemore d'Arc, Stéphane Marie André, 1474 Ways (BE); Mortier, Michel, 4431 Loncin (BE)
(74) Mandataire: Overath, Philippe

(57) **Abrégé**

Le dispositif de chargement pour plusieurs types de cassettes (50, 60) comprend un logement (1) recevant la cassette ainsi qu'une coulisse (18) actionnée par la cassette, munie de deux butées (15, 16) et coopérant avec un levier (3) pouvant pivoter et/ou basculer autour d'un axe (5) porté par le logement (1).

Le levier (3) possède un doigt latéral (7) et un sabot (8) coopérant chacun avec une discontinuité (62) respectivement (52) propre à chaque type de cassette. Ce levier, par l'intermédiaire d'un arrêt (9) bloque tout déplacement de la coulisse (18) et donc toute insertion d'une cassette (50, 60) aussi longtemps qu'elle est mal présentée par l'utilisateur, c'est-à-dire tant que la discontinuité (52, 62) ne rencontre pas le doigt (7) ou le sabot (8) pour permettre au levier (3) de se déplacer.

Le levier (3) détecte également le type de cassette (analogique ou numérique) insérée.

## Description

La présente invention se rapporte à des appareils d'enregistrement et/ou de lecture d'informations portées par un support contenu dans une cassette, cartouche ou boîtier. Elle concerne notamment les mécanismes assurant le transfert desdits supports entre leurs positions opératives et inopératives.

Dans le domaine des magnétophones en particulier, une cassette d'un premier type dite cassette compacte numérique ou DCC a été récemment introduite sur le marché et assure le stockage d'informations sous forme numérique. Destinée à succéder à la cassette du second type dite compacte analogique ou CC disponible depuis de nombreuses années, la cassette DCC comporte un boîtier semblable à celui de la cassette CC afin que les nouveaux magnétophones mis en vente acceptent ces deux types de cassette pour l'enregistrement et/ou la reproduction d'informations et permettent une transition aisée et peu coûteuse de la cassette CC vers la cassette DCC.

Si grâce à la similitude des deux boîtiers de cassette, il est possible de mettre au point un dispositif de chargement commun, il est recommandé de détecter avant sa mise en position opérative, le type de cassette inséré par l'utilisateur car des éléments de lecture, d'enregistrement et d'entraînement sont sensiblement différents et doivent être adaptés avant toute coopération avec ladite cassette et/ou son support d'informations.

En outre, la cassette numérique DCC ne possède qu'une seule face et qu'un seul sens opératif, et comme elle est de forme parfaitement parallélépipédique, l'utilisateur, surtout dans le cas d'appareils pour voitures, risque fortement de la présenter d'une façon inappropriée, par exemple sens dessus dessous ou bien faces avant/arrière inversées avec le risque d'endommager des éléments de lecture et/ou d'enregistrement et/ou de bloquer le dispositif de chargement et donc l'appareil concerné.

La demande de brevet européenne EP 0 444 623 propose un dispositif discernant le type de cassette inséré, mais d'une part il ne bloque le mouvement d'insertion qu'en fin de course et bien souvent l'utilisateur a alors tendance à forcer le mécanisme car il ne réalise pas que la cassette a été mal insérée et d'autre part, il n'est applicable qu'à un chargement des cassettes par leur grand côté ce qui est valable pour les appareils de maison mais inapplicable aux appareils pour voitures car le chargement des cassettes se fait toujours par leur petit côté pour des raisons impératives d'encombrement.

La demande européenne N° 0 514 983 se rapporte à un chargement des cassettes par leur petit côté mais si le dispositif qu'elle décrit distingue une cassette numérique d'une cassette analogique, cela n'a lieu que lorsque les cassettes sont correctement présentées par l'utilisateur. Or, les cassettes numériques étant parfaitement parallélépipédiques, le risque d'une insertion erronée est grand et dans ce cas ce dispositif considère toute cassette numérique mal présentée comme une cassette analogique ce qui est non seulement une erreur mais également une source potentielle importante de disfonctionnement et donc d'endommagement ou de panne de l'appareil. En outre, le dispositif met en oeuvre de nombreux leviers et ressorts, ce qui nécessite une fabrication et un assemblage assez précis et n'est guère favorable à la fiabilité surtout pour des appareils placés dans des véhicules.

La demande européenne 0 549 376 décrit un dispositif assurant simplement l'ouverture du volet protecteur d'une cassette numérique lorsqu'elle est correctement présentée. Il n'y a donc ni détection du type de cassette, ni vérification de son insertion correcte.

Le but de la présente invention est donc de remédier à ces inconvénients en proposant des moyens simples, fiables, faciles à mettre en oeuvre qui vérifient la présentation correcte de la cassette et/ou en assurent la détection du type sans risque d'erreur pour, d'une part, permettre uniquement le chargement des cassettes correctement présentées et/ou d'autre part, assurer que les moyens tant mécaniques qu'électroniques de lecture, d'enregistrement et d'entraînement, correspondent au type de cassette inséré.

Un second but de l'invention est de proposer des moyens ne mettant en oeuvre qu'un nombre très limité de pièces de façon à obtenir une grande fiabilité et un coût de fabrication réduit.

Un troisième but de l'invention est de proposer des moyens ne nécessitant qu'un faible encombrement de façon à pouvoir être facilement incorporés aux appareils prévus pour les applications automobiles où l'espace disponible est excessivement restreint.

Un autre but de l'invention est de proposer des moyens bloquant l'insertion d'une cassette mal présentée le plus tôt possible et de préférence avant tout déplacement du logement recevant la cassette de façon à ce que l'utilisateur ne soit jamais tenté de forcer le mécanisme.

En vue de la réalisation de ces buts, le dispositif objet de l'invention est essentiellement caractérisé par le contenu de la revendication principale.

D'autres particularités, caractéristiques de l'invention ressortiront de la description détaillée d'un mode de réalisation préféré donné ci-dessous à titre non limitatif, auquel diverses modifications peuvent être apportées sans pour autant sortir du cadre de l'invention et pour lequel :
- la figure 1 représente une vue de dessus du logement d'un mécanisme de chargement muni du dispositif objet de l'invention et pour lequel sont schématiquement et partiellement montrées une cassette analogique (traits discontinus) et une cassette numérique (traits pleins) lorsque présentées correctement par l'utilisateur,
- la figure la est une vue de face du dispositif représenté à la figure 1 sans cassette,
- la figure 2 est une vue en perspective à plus grande échelle de deux éléments de la figure 1,
- la figure 3 est une vue latérale partielle des éléments montrés à la figure 2 après actionnement par une cassette analogique correctement présentée,
- la figure 4 est un détail de la figure 1 lors de l'insertion d'une cassette numérique correctement présentée,
- la figure 5 est semblable à la figure 1 et montre le dispositif bloquant l'insertion d'une cassette numérique mal présentée par l'utilisateur,
- la figure 6 est semblable à la figure 1 et représente le dispositif après l'insertion d'une cassette correctement présentée, ici une cassette numérique,
- les figures 7a et 7b respectivement représentent schématiquement en perspective une cassette analogique (second type) et une cassette numérique (premier type).

Dans un souci de clarté, on n'a représenté sur ces figures que les éléments essentiels à la compréhension de l'invention.

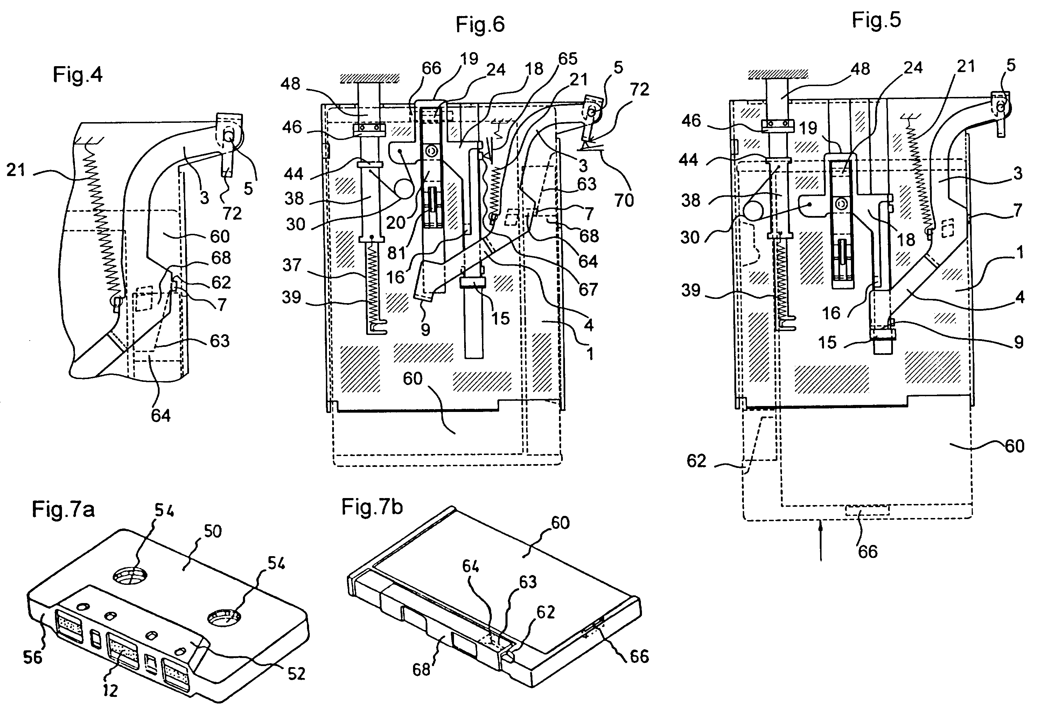

Comme montré aux figures 7a et 7b, la cassette analogique 50 et la cassette numérique 60 ont sensiblement la même forme parallélépipédique, la même taille; cependant, la cassette 60 du premier type comporte une discontinuité 62 qui lui est propre : une dépression associée à un volet 68 protégeant l'accès au support magnétique, tandis que la cassette 50 du second type se distingue par une discontinuité 52 particulière : une protubérance sur les deux faces d'un même côté.

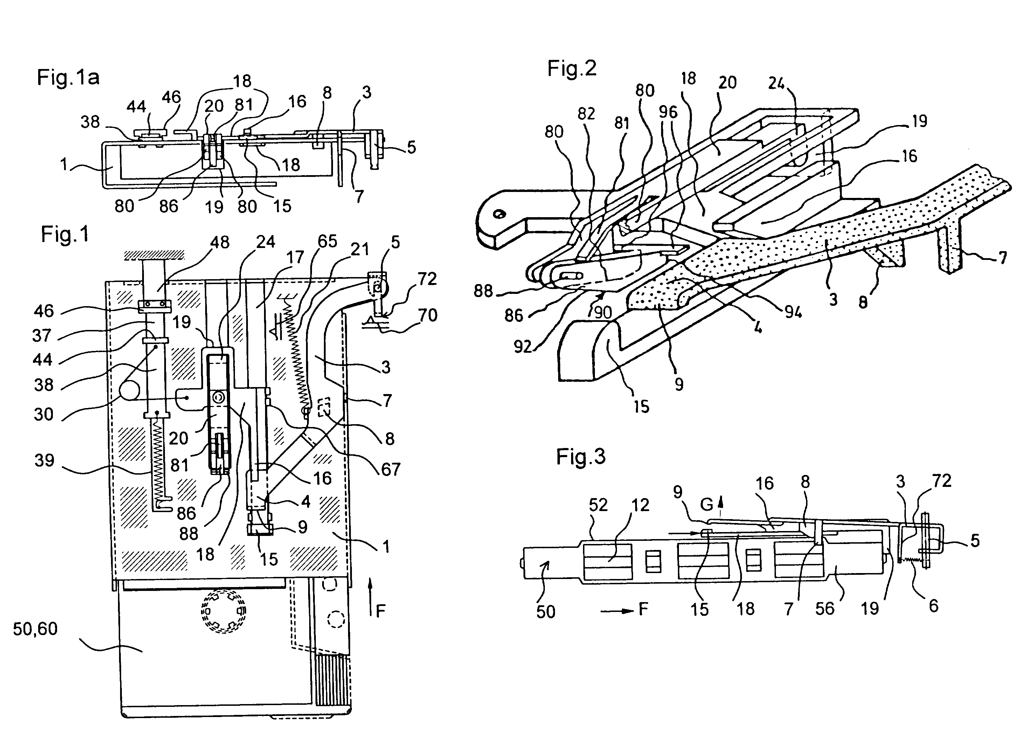

Comme il apparaît aux figures 1 et 1a, le dispositif de chargement comprend principalement un logement 1 destiné à recevoir une cassette 50, 60 et effectuant ensuite sous la commande d'un moteur électrique un déplacement horizontal puis vertical pour amener la cassette en position opérative. Pour plus d'explications quant au mécanisme de chargement, on se référera avantageusement au brevet belge N° 891.045 de la demanderesse. De même, pour une description complète du fonctionnement de l'appareil de lecture et/ou d'enregistrement, on se reportera avantageusement à la demande de brevet européen N° 0 667 613 de la demanderesse.

Conformément à l'invention, le logement 1 comporte notamment (voir figures 1, 2 et 3) un levier 3 pouvant basculer et pivoter autour d'un axe 5 fixé sur ce logement. Des moyens élastiques 6 ancrés d'une part à l'axe 5 et d'autre part à une patte 72 du levier 3 le maintiennent contre la surface supérieure du logement 1; la patte 72 pouvant actionner un interrupteur 70 disposé sur le bâti de l'appareil et indiquant le type de cassette insérée. Le levier 3 porte également un doigt 7 qui s'étend vers le bas le long d'une paroi latérale du logement 1 et un sabot 8 destinés à coopérer avec une cassette 60, respectivement 50 introduite dans le logement 1. Le levier 3 possède à son extrémité libre 4 un pli formant un arrêt 9 et coopère avec deux butées 15 et 16 d'une coulisse 18, la butée 16 limitant à tout instant le pivotement du levier 3 dans le sens horlogique (figures 1, 2) imparti par un ressort 21 fixé au logement 1 et au levier 3. Cette coulisse 18 est montée au travers d'une fente 17 pratiquée dans la partie supérieure du logement 1 pour pouvoir y être translatée (figure 1) et possède à son extrémité arrière une patte 19 s'étendant vers le bas pour coopérer avec la face avant d'une cassette 50, 60. La coulisse 18 porte une languette flexible 20, possédant à ses extrémités une patte 24 et un sabot 86 destinés à coopérer avec un orifice spécialement prévu dans les cassettes tant numériques 60 qu'analogiques 50. La coulisse 18 a une forme de L inversé et sur son petit côté se trouve fixée une extrémité d'un ressort en épingle 30 dont l'autre extrémité est fixée sur une plaque mobile 38 également montée en translation sur le logement 1 au travers d'une fente 37. Cette plaque mobile 38 est soumise à l'action d'un ressort 39 attaché au logement 1 et possède à son extrémité opposée une épaisseur 44 destinée à coopérer avec un crochet 46 monté sur une lame ressort 48 fixée au bâti de l'appareil.

Lorsqu'aucune cassette n'est présentée dans le logement 1, tous les éléments décrits ci-dessus se trouvent dans la position représentée aux figures 1, la, 2 et notamment le doigt 7 du levier 3 est dégagé du volume intérieur du logement 1 par action de la butée 16 sur le levier 3.

Lorsqu'une cassette 50, 60 est présentée dans le logement par l'utilisateur (flèche F, figure 1), sa face avant progresse vers la patte 19 de la coulisse 18 pour atteindre la position représentée à la figure 1, c'est-à-dire que plus d'un tiers de son boîtier est à l'extérieur du logement 1.

S'il s'agit d'une cassette du second type (analogique) 50 (figure 7a), correctement présentée (figure 3), la protubérance 52, située sur un seul côté et permettant aux têtes ainsi qu'aux moyens d'entraînement d'accéder au support magnétique 12, rencontre le sabot 8 et le pousse vers le haut (figure 3 - flèche G). De ce fait, le levier 3 bascule autour de l'axe 5 à l'encontre des moyens élastiques 6 et l'arrêt 9 échappe à la butée 15 de la coulisse 18. Celle-ci est donc libre et comme la cassette 50 s'appuie contre la patte 19, elle accompagne la translation impartie à la cassette. Le doigt 7 porté par le levier 3 s'appuie en permanence contre la face latérale 56 de la cassette 50 qui n'offre aucune discontinuité (figures 3 et 7a) et le levier 3 ne peut donc pas pivoter dans le sens horlogique autour de l'axe 5; par conséquent, l'interrupteur 70 (figure 1) n'est pas actionné. Comme montré à la figure 2, un sabot 86 est monté en pivotement autour d'un axe 88 porté par les extrémités latérales avant 80 faisant office de sabots fixes de la languette 20 (celui de droite est omis sur le dessin pour une meilleure compréhension de cet assemblage). Ce sabot mobile 86 possède un profil 90 comportant une partie avant 92 légèrement inclinée pour coopérer avec la surface supérieure d'une cassette du premier type (numérique) 60 et une partie arrière 94 fortement inclinée afin d'engager la périphérie d'une ouverture 54 pratiquée dans le boîtier d'une cassette du second type (analogique) 50 pour accéder aux bobines de bande magnétique. Une languette 81 également en matière flexible, de préférence moulée avec la languette 20, fait pivoter ce sabot 86 vers le bas. Deux ergots latéraux 96 limitent ce pivotement en s'appuyant sur l'arrière des sabots fixes 80.

Comme les cassettes 50 du second type sont moins épaisses que celles 60 du premier type, le sabot 86 est légèrement relevé à l'encontre de la languette 81 lors de leur introduction et la partie 92 du profil 90 permet un glissement aisé de la cassette. Lorsqu'une ouverture 54 approche le profil 94, le sabot 86 est pivoté vers le bas, ledit profil 94 s'engageant dans l'ouverture 54 pour lier la cassette 50 à la coulisse 18.

En poursuivant le mouvement d'insertion de la cassette, le point d'ancrage du ressort 30 sur la coulisse 18 rattrape puis dépasse son point d'ancrage sur la plaque mobile 38. Dès ce moment, la coulisse 18 et donc la cassette 50 subissent l'influence du ressort 30 qui les pousse toutes deux au fond du logement 1 tandis que par réaction, l'autre extrémité du ressort 30 repousse la plaque mobile 38 vers l'avant. L'ensemble de tous ces éléments se trouve alors dans la position représentée à la figure 6 et un bossage 67 de la coulisse 18 actionne l'interrupteur 65 commandant des moyens, tel un moteur électrique, effectuant la poursuite du mouvement de chargement; l'interrupteur 70 indiquant la présence d'une cassette du type analogique.

Si la cassette du second type (analogique) 50 est mal présentée par l'utilisateur, c'est-à-dire avec la protubérance 52 située à gauche, le levier 3 ne peut pivoter puisque le doigt 7 reste en permanence appuyé sur le flanc de la cassette qui n'offre aucune discontinuité et le sabot 8 ne rencontre jamais la protubérance 52. Par conséquent, l'arrêt 9 du levier 3 bloque la butée 15 et donc la coulisse 18; ainsi, la cassette ne peut être insérée plus avant (figure 1) et l'utilisateur s'en rendant immédiatement compte, va d'instinct la retirer pour la représenter correctement.

Si maintenant l'utilisateur présente de façon correcte une cassette du premier type (numérique) 60 (figure 7b) dans le logement 1, le profil 90 du sabot 86 rencontre l'arête avant de la cassette 60 puis sa face supérieure. Comme cette cassette 60 est plus épaisse que la cassette 50, la partie avant 92 du profil fait pivoter le sabot mobile 86 vers le haut, il reste parallèle au profil 82 des sabots fixes 80 qui laissent la cassette 60 coulisser librement.

Par action de la cassette 60 sur la patte 19, la butée 16 recule légèrement permettant le pivotement du levier 3 autour de l'axe 5 dans le sens horlogique (figure 4) car le doigt 7 pénètre dans la discontinuité ou dépression 62 prévue uniquement sur un côté de la face supérieure de toute cassette 60 du premier type pour retenir le volet 68. L'arrêt 9 du levier 3 échappe alors à la butée 15 et la coulisse 18 peut être librement translatée.

La poursuite de la translation de la cassette 60 fait en sorte que le doigt 7 reste sensiblement au même niveau pour limiter le déplacement du volet 68 et donc donner accès au support magnétique. Le levier 3 poursuit son pivotement dans le sens horlogique jusqu'à ce que le doigt 7, en suivant le profil 63 de la dépression 62, aboutisse dans l'encoche 64 (figures 4 et 6) pour verrouiller le volet 68 dans sa position d'ouverture maximale. Le pivotement de la patte 72 du levier 3 assure l'actionnement de l'interrupteur 70 (figure 6) indiquant que la cassette insérée est du premier type (numérique). Simultanément, la patte 24 portée par la languette 20 pénètre dans la dépression 66 prévue uniquement sur la face supérieure du boîtier de ce type de cassette 60 (figure 7b) et lie la cassette 60 à la coulisse 18.

Ainsi, tous les éléments propres à ce type de cassette, tels les têtes de lecture/d'enregistrement, peuvent être positionnés et/ou activés et ce alors que la cassette vient tout juste d'être présentée à son niveau inopératif par l'utilisateur. Notamment, le circuit contrôlant le défilement du support en enregistrement/reproduction est commuté pour asservir celui-ci au débit d'informations numériques à enregistrer sur ou lire à partir du support 12, alors que, dans le cas de cassettes du second type (analogiques), ce défilement se fait à vitesse constante.

Comme précédemment décrit, au cours de la translation de la cassette du premier type (numérique) 60 et de la coulisse 18, le point d'ancrage du ressort 30 sur la coulisse 18 rattrape puis dépasse son point d'ancrage sur la plaque mobile 38 et de ce fait la coulisse 18 et la cassette 60 sont toutes deux poussées vers le fond du logement 1 par le ressort 30 et l'interrupteur 65 est actionné par le bossage 67 tandis que la plaque mobile 38 est repoussée vers l'avant.

Si la cassette du premier type (numérique) 60 a été mal présentée par l'utilisateur, c'est-à-dire soit sens dessus dessous soit inversée, c'est-à-dire avec le volet de protection sur le côté gauche (figure 5) le levier 3 ne peut pivoter autour de son axe 5 puisque le doigt latéral 7 ne rencontre pas la discontinuité 62. Comme d'autre part cette cassette ne possède pas la protubérance 52 particulière à la cassette du second type (analogique) 50, le sabot 8 reste inactif et le levier 3 ne peut pas basculer autour de son axe 5, dès lors l'arrêt 9 reste face à la butée 15 de la coulisse 18 empêchant toute translation de celle-ci et de la cassette 60. Par conséquent, l'utilisateur est immédiatement averti que la cassette est mal présentée.

Ainsi, le dispositif proposé assure une sécurité totale puisqu'il empêche toute cassette mal présentée, quel que soit son type, de pénétrer correctement dans le logement 1 et il distingue sans équivoque une cassette analogique d'une cassette numérique. En outre, en ne mettant en oeuvre que des moyens simples et en nombre réduit, il procure une très grande fiabilité d'utilisation.

Lorsqu'une cassette du second type (analogique) 50 est retirée du logement (figure 1) le profil 94 assure un léger pivotement vers le haut des sabots fixes 80 par flexion de la languette 20 et il échappe alors à l'ouverture 54 libérant ainsi la cassette. De même, lorsqu'une cassette du premier type (numérique) 60 est retirée, la patte 24 échappe à l'ouverture 66 par flexion du support 20 et le profil 90 du sabot mobile 86 ayant un rayon de courbure bien supérieur à celui de l'ouverture 66, ne peut pénétrer l'ouverture 66 et donc gêner le coulissement de la cassette numérique 60. Une fois la cassette 50, 60 retirée du logement, la butée 16 ramène le levier dans la position représentée à la figure 1, son arrêt 9 fait face à la butée 15.

Les interrupteurs 65, 70 ont été schématiquement représentés mais on comprend aisément qu'ils puissent être incorporés aux circuits d'alimentation des organes concernés ou connectés à un microprocesseur qui en détecte l'état et à l'aide d'un programme préétabli commande le positionnement des organes appropriés.
- 1: logement
- 3: levier
- 4: extrémité
- 5: axe
- 6: moyens élastiques
- 7: doigt
- 8: sabot
- 9: arrêt
- 12: support
- 15: butée
- 16: butée
- 17: fente
- 18: coulisse
- 19: patte
- 20: languette
- 21: ressort
- 24: crochet
- 30: ressort
- 37: fente
- 38: coulisse
- 39: ressort
- 44: épaisseur
- 46: crochet
- 48: lame ressort
- 50: cassette analogique
- 52: discontinuité
- 54: ouvertures
- 56: face latérale
- 60: cassette numérique
- 62: ouverture
- 63: profil de l'ouverture 62
- 64: dépression
- 65: interrupteur
- 66: dépression
- 67: bossage
- 68: volet
- 70: interrupteur
- 72: patte
- 80: sabot fixe
- 81: languette
- 82: profil du sabot fixe
- 86: sabot mobile
- 88: axe du sabot mobile
- 90: profil du sabot mobile
- 92: partie avant du profil 90
- 94: partie arrière du profil 90
- 96: ergots latéraux

## Revendications

1. Dispositif de détection de cassettes pour appareils de lecture et/ou d'enregistrement, ledit dispositif étant associé au logement (1) d'un mécanisme de chargement recevant ladite cassette (50, 60) et comprenant une coulisse (18) mobile par rapport audit logement et mue par l'insertion d'une cassette, caractérisé en ce qu'il comporte également un élément (3) déplaçable dans au moins un plan et coopérant d'une part avec une cassette présentée dans ledit logement et d'autre part avec la coulisse (18) pour, à l'aide d'un arrêt (9), bloquer tout déplacement de la coulisse et donc toute insertion de la cassette (50, 60) aussi longtemps que l'élément (3) ne subit pas de déplacement.

2. Dispositif selon la revendication 1, caractérisé en ce que l'élément (3) est déplaçable dans deux plans distincts.

3. Dispositif selon l'une des revendications précédentes, caractérisé en ce que l'élément (3) porte un doigt (7) destiné à coopérer avec une discontinuité (62) propre à un premier type de cassette (60) pour déplacer l'élément (3) et donc effacer l'arrêt (9) uniquement lorsqu'une telle cassette (60) est correctement insérée.

4. Dispositif selon la revendication 3, caractérisé en ce que l'élément (3), actionne, lorsqu'il est déplacé, un interrupteur (70) indiquant la présence d'une cassette (60) du premier type.

5. Dispositif selon l'une quelconque des revendications précédentes, caractérisé en ce que l'élément (3) possède un sabot (8) dimensionné de telle sorte qu'il coopère avec une discontinuité (52) propre à une cassette du second type (50) pour déplacer l'élément (3) et effacer l'arrêt (9) y associé.

6. Dispositif selon la revendication 5, caractérisé en ce que le sabot (8) est positionné latéralement pour que l'élément (3) se déplace uniquement lorsque la cassette du second type (50) est correctement insérée.

7. Dispositif selon l'une quelconque des revendications précédentes, caractérisé en ce que l'élément (3) est soumis à l'action de moyens élastiques (6, 21).

8. Dispositif selon l'une quelconque des revendications précédentes, caractérisé en ce que la coulisse (18) possède une butée (16) coopérant avec l'élément (3) pour, en position inopérative, maintenir son arrêt (9) en face de la butée (15) limitant le déplacement de ladite coulisse.

9. Dispositif selon l'une quelconque des revendications précédentes, caractérisé en ce que l'élément (3) est constitué d'un levier pivotant et/ou basculant autour d'un axe (5) porté par le logement (1).

10. Dispositif selon la revendication 9, caractérisé en ce le levier (3) porte le doigt (7) et le sabot (8) pour discriminer le type de cassette insérée.

11. Dispositif selon l'une quelconque des revendications précédentes, caractérisé en ce que la coulisse (18) possède au moins un élément (24; 80, 86) solidarisant temporairement une cassette (50, 60) à ladite coulisse.

12. Dispositif selon la revendication 11, caractérisé en ce que l'élément (80, 86) est constitué d'un sabot fixe (80) et d'un sabot mobile (86) dont les profils (82; 90, 92, 94) coopèrent avec la surface supérieure de chacun des types de cassette (50, 60).
